# EUROPEAN PATENT APPLICATION

(11) **EP 4 407 216 A1**
(43) Date of publication of application: **31.07.2024**
(21) Application number: 23153942.0
(22) Date of filing: 30.01.2023
(51) Int. Cl.: F16J 15/02, B60J 10/22, B60J 10/30, F16J 15/06, F16J 15/10

(54) **SEAL FOR A HEAT PUMP CASING**

(71) Applicant: BDR Thermea Group B.V., 7332 BD Apeldoorn (NL)
(72) Inventor: BICHLER, Arnaud, 7332 BD Apeldoorn (NL); WENDLING, Thomas, 7332 BD Apeldoorn (NL); ANTOINE, Florian, 7332 BD Apeldoorn (NL)
(74) Representative: Dennemeyer & Associates S.A.

(57) **Abstract**

The invention relates to a seal (1) for a heat pump casing (20). The seal (1) has an elongated shape extending along a body axis (I) of the seal (1). The seal (1) has a bearing section (2) and a sealing section (3) that is connected to the bearing section (2). The bearing section (2) and the sealing section (3) define a gas pocket (4) extending along the body axis (I) of the seal. The seal (1) comprises at least one fixing structure (10) for fixing the seal (1) to the heat pump casing wherein the fixing structure (10) is connected to the bearing section (2).

## Description

The invention relates to a seal for a heat pump casing. In addition, the invention relates to a heat pump system comprising such a seal and method of manufacturing such a seal.

Heat pump systems use refrigerants to transport heat from a source to a destination. Such refrigerants may be flammable. The use of flammable refrigerants could result in dangerous situations in case of refrigerant leaks, in particular when the heat pump system is located indoors, such as for example ground source heat pump systems. Electrical elements and hot spots may result in an explosion in case of refrigerant leakage and contact between those elements.

Heat pump systems may comprise a heat pump casing (or housing) in which components of the heat pump system are positioned, like a control unit, compressor, evaporator, condenser and expansion valve. Heat pump systems are known to have an exhaust port provided in the heat pump casing to vent any leaked refrigerant in a controlled fashion out of the heat pump casing, preferably to the outdoors. A fan may be provided to blow air, possibly comprising leaked refrigerant, out of the heat pump casing.

However, to guarantee proper functioning of the exhaust port, the entire heat pump casing has to be air-tight so any air, potentially loaded with leaked refrigerant, is vented through the exhaust port only. Or at least, the heat pump casing has to be gas-tight for the refrigerant used, so no refrigerant can escape through any other openings in the heat pump casing.

Openings in the heat pump casing may be present where different casing parts (e.g. panels), forming the heat pump casing, are joined. Such openings can be sealed by using gaskets or seals. Several types are known, such as polyurethane foam gaskets and EPDM (ethylene propylene diene monomer rubber) seals. In this text the words seal and gasket are used interchangeably.

These seals are usually bonded to a surface of a casing part and as such lead to various issues, like a limited lifespan. Thus, a proper seal cannot be guaranteed during the lifetime of the heat pump system.

Also known are open cell or closed cell polyurethane foam gaskets. These types of solutions are inexpensive but are limited to simple cases where the geometry is constant. Polyurethane is shaped by a cutting process and the possibilities of shaping are thus limited.

Further known are gaskets in flexible materials like EPDM. This solution is particularly tight thanks to a non-porous and flexible surface which is deformed to fit the part to be sealed. However, these parts are fragile when in contact with a sharp surface. In the event of a sharp edge, EPDM type gaskets cut along their entire length and no longer serve their purpose.

Known gaskets are generally bonded to a surface. This leads to problems of ergonomics and sealing. The gaskets come off with temperature and humidity variations. In addition, the installation of adhesive parts requires the removal of a peelable which is cumbersome. This removal can be problematic because it tears or removes adhesive and reduces the performance of the solution.

Known solutions have a limited life span depending on the environment of use and may no longer serve their purpose after some time.

In addition, such gaskets are generally built with 2 components (EPDM and sticky material) which makes it more difficult to recycle and therefore less environmentally friendly.

Other solutions are available where the seal is slid over the edge of a casing part. This ensures a good resistance in time. However, in time the seal can come off if. This may happen if, once installed, the mechanical forces working on it are in a direction opposite to the direction of installation. Such a mechanical force may for instance be exerted by an adjacent casing part of the heat pump casing. Also, such seals can only be placed at the edge of a casing part.

In addition to safety issues, heat pump systems installed indoors are more sensitive to noise problems caused by the heat pump. Noise may be generated by the compressor and the fan used for venting purposes described above.

The object of the invention is therefore to provide a seal for a heat pump casing that is easy to install, durable, remove and recycle.

The object is solved by seal for a heat pump casing, wherein the seal has an elongated shape extending along a body axis of the seal, wherein the seal has a bearing section and a sealing section that is connected to the bearing section, wherein the bearing section and the sealing section define a gas pocket extending along the body axis of the seal and wherein the seal comprises at least one fixing structure for fixing the seal to the heat pump casing wherein the fixing structure is connected to the bearing section.

The seal acts as a refrigerant sealing, ensuring proper sealing of a heat pump casing, especially a heat pump casing in which flammable refrigerant may be present. The curved geometry of the cross-section allows it to be supported in different shapes.

The seal also acts as a sound insulator. The presence of a gas pocket improves noise reduction performance. Sound, being sound waves propagating through the air as sound waves, has to pass through several different layers of the seal to propagate from the inside of the heat pump casing to the outside. The sound has to propagate through air, 1st layer of material (closed contour), air (gas pocket), 2nd layer of material (closed contour) and air in order to travel through the seal. This reduces the amplitude of the sound waves. In certain embodiments having an inner wall (described in more detail below) there may be even more layers to pass through and thus more obstacles to the transmission of the sound wave, for example with B-profile. This acoustic performance is particularly important for a product installed indoors.

The seal has an increased lifetime as no glue or adhesives are used, which tend to degrade over time, as a result of temperature change and humidity.

The fixing parts allow the seal to be fixed to the surface of casing parts (e.g. panels) where needed, instead of only being mountable to the edge of such casing parts.

The fixing parts allow easy and fast appliance of the seal and the seal is easy to remove and recycle, as there is no glue or adhesive used.

The seal is preferably flexible to be applied in a curved manner to follow the contours of the heat pump casing. This makes it possible to make a continuous sealing along an entire surface, thus limiting the leakage areas between two successive seals. In particular, the seal may be in the form of a closed loop, the circumference of which corresponds to the periphery of the area or panel to be sealed.

According to an embodiment the bearing section and sealing section are configured to form a closed contour around the gas pocket.

The term closed contour is used to refer to a closed contour in a cross-sectional view of the seal, the cross section taken perpendicular to the body axis of the seal, thus seen in a direction along the body axis. It is noted that the gas pocket extends along the body axis of the seal and may have open ends at the ends of the seal.

Alternatively, the bearing section and sealing section are configured to form a semi-closed contour, for instance comprising one or more openings that extend along part of or the entire body axis of the seal.

The term semi-closed contour is used to refer to a contour with an opening. The opening may extend along the length of the seal.

According to an embodiment the fixing structure is fixedly connected to the bearing section. "Fixedly" means that the fixing structure cannot be moved relative to the bearing section. The fixing structure may be formed as a protrusion extending from the bearing section in a direction perpendicular from the body axis. The fixing structure may be connected to the bearing section at a bearing section that is distal from the gas pocket.

According to an embodiment the fixing structure has an undercut shape, which is configured to be force-fitted into an opening in the heat pump casing. The undercut shape further limits removal of the fixing structure from such an opening. This allows for an easy fix of the seal to the heat pump casing, without requiring tools.

According to an embodiment the fixing structure comprises a plug section and a connection section for connecting the plug section to the bearing section, wherein the plug section has a tapered shape in a direction away from the connection section, with a maximum width of the plug section located adjacent to the connection section, the maximum width being greater than a width of the connection section.

The tapered shape facilitates force-fitting the plug section into an opening in the heat pump casing, while the maximum width of the plug limits removal of the plug section from the opening.

The tapered shape may be a single taper, running from the maximum width to a minimal width at the distal end of the plug section in a continuous manner. Alternatively, the tapered shape may be stepped profile with alternating narrowing parts and widening parts. The tapered shape may be any shape having a reducing width, including a semi-spherical shape.

The fixing structure has the advantage that it can be mounted on the face of a panel or surface, not just on an edge of a panel or surface.

According to an embodiment the maximum width is at least 1,4 mm greater than the width of the connection section.

This is found to be a satisfactory width difference to balance easy installation without significant error, while guaranteeing sufficient hold.

According to an embodiment the seal comprises a clamping surface at the transition from the connection section to the plug section, the clamping surface facing at least part of the bearing section.

According to an embodiment the plug section has a middle part with a taper angle in the range of 30° - 70°. The middle part of the plug section having said taper angle comprises at least one cross section with a width similar to the width of the opening in the heat pump casing. The cross section is taken perpendicular to the body axis of the seal.

According to an embodiment the fixing structure has an elongated shape in the direction of the body axis, extending along part of the seal. The elongated shape of the fixing structure is preferably at least 10 times larger than a maximum width of a cross section of the seal, the cross section being perpendicular to the body axis of the seal.

Preferably, the seal comprises at least two fixing structures. If the seal is applied along a curved or cornered path, it is recommended to have at least two fixing structures between each change of direction. The fixing structures are preferably spaced at intermediate distances along the seal that are at least twice, for instance five times, the length of the fixing structures along the body axis to facilitate installation and ergonomics. This does not degrade the performance of the solution.

According to an embodiment wherein the fixing structure comprises two parallel connection sections and plug sections.

According to an embodiment the closed contour is formed by a, in particular flat, bearing section and a sealing section, wherein the bearing section is at least partially made from a material having a hardness of at least 70Shore A and wherein the sealing section is at least partially made from a material having a hardness of less than 35 Shore A.

The fixing structure may be made from a material having a hardness of at least 70 Shore A, e.g. in the range of 70 - 90 Shore A. The material of the bearing section, in particular at least a part of the material of the bearing section, can have a hardness that is higher than the material of the sealing section, in particular at least a part of the material of the sealing section.

Preferably, at least part of the bearing section is made from a material having a hardness in the range of 70 - 90 Shore A. The fixing structure is preferably made from a material having a hardness in the range of 70 - 90 Shore A, preferably the same material as used for the bearing section. Preferably, at least part of the sealing section is made from a material having a hardness in the range of 20 - 35 Shore A. The part of the bearing section that is adjacent the sealing section may be made of a material having a different hardness, the same hardness as the sealing section or the same hardness as the bearing section (and possibly fixing structure).

The sealing section, i.e. the section that deforms to perform the sealing function, has a lower density or hardness than the heat pump casing. This provides good mechanical strength to ensure a long life and high environmental compatibility. At the same time, the area with a low density (sealing section) has the capacity to deform easily to play the role of insulator.

By using two materials of different hardness, better sealing can be achieved. The sealing section can be more flexible to nicely follow the parts to be sealed, while the bearing section and the fixing structure are less flexible, increasing reliability, lifetime and holding. According to an embodiment the first and second materials are
- elastomer, in particular a thermoplastic elastomer and/or
- ethylene propylene diene monomer (EPDM).

These materials are durable and easy to manufacture into the desired shape. The seal may be manufactured by extrusion.

An elastomer, such as a thermoplastic elastomer may be used. This material class is referred to as TPE. Among the class TPE, EPDM (ethylene propylene diene monomer) may be selected.

The sealing section and the bearing section may be made from EPDM, Nitrile, fluorocarbon-based fluoroelastomer (FKM) or natural rubber.

The sealing section and the bearing section can be made from the same material, with a different hardness, or may be made from different materials.

According to an embodiment the bearing section and the sealing section, when seen in a direction along the body axis, have a
- D-shape, the bearing section forming the straight part of the D, or
- B-shape, the bearing section forming the straight part of the B, or
- triangular shape, the bearing section forming the base of the triangular shape, or
- polygonal shape, or
- substantially rectangular shape, the bearing section forming one side of the rectangular shape.

Additionally or alternatively the sealing section comprises
- an inner wall, creating two parallel gas pockets, and/or
- one or more protrusions on an outside of a sealing section,
   and/or the bearing section comprises a serrated surface at an outside of the seal.

According to an embodiment the gas pocket is a closed gas pocket and the gas pocket is filled with CO₂.

The air pocket may be closed at the longitudinal ends of the seal by gluing or welding. Replacing air by CO₂ the acoustic insulation is improved as CO₂ has a greater molar mass compared to air.

According to an aspect there is provided a heat pump system, comprising a seal according to the above. The heat pump system may in particular be a heat pump system carrying flammable refrigerants.

The term flammable is used with reference to the ASHRAE standards for refrigerants and EN 378-2, defining the following classes: 1, 2L, 2, or 3, ranging from no flame propagation to high flame propagation and high heat of combustion. The term flammable is used to refer to refrigerants that are highly flammable, class 3, such as R290 (propane), R600 (butane) and R600a (isobutane). Class 3 refrigerants, when tested, exhibit flame propagation at 140°F (60°C) and 14.7 psi (101.3 kPa) and that either has a heat of combustion of 19,000 kJ/kg (8,174 BTU/lb) or greater or an LFL of 0.10 kg/m3 or lower. The term flammable may also be used here to refer to refrigerants from class 2 (less flammable), such as R-152a or class 2L (mildly flammable) such as R-32, R-1234yf, R-1234ze.

The seal is in particular advantageous for heat pump systems having a flammable refrigerant, as the seal prevents refrigerant, when leaked, from leaving the heat pump system and spread through the installation site.

The heat pump system may be a heat pump installed indoors, such as a ground source heat pump.

The heat pump system may comprise a heat pump casing, formed by a plurality of casing parts (e.g. metal sheets), which are connected to each other to form the heat pump casing and which are sealed with seal as described. The heat pump casing may contain refrigerant carrying heat pump elements, such as a compressor, an expansion valve, a condenser, an evaporator and refrigerant piping.

The heat pump casing may be provided with an exhaust port and a fan, to blow air, possibly comprising leaked refrigerant, out of the heat pump casing. The exhaust port may have an outlet to the outdoors to blow such air into the outdoors.

The heat pump casing with the seals may be gas-tight, at least gas-tight for refrigerants. It is noted that the refrigerant molecule is larger than the molecules constituting the ambient air. This is particularly the case for the C₃H₈ propane molecule compared to the O₂, N₂, CO₂ molecules. The term gas-tight is thus not necessarily used here as meaning air-tight.

The heat pump system may comprise two or more seals, which are with their longitudinal ends connected thereby creating a single gas pocket extending over the two or more seals. The connection may be established by gluing or welding. According to a further embodiment, the heat pump system comprises a plurality of seals, which are connected in series to form a closed loop, thereby creating a continuous closed gas pocket.

In particular, the seal may be in the form of a closed contour, the circumference of which corresponds to the periphery of the area or panel to be sealed. Also, the two or more seals, with their longitudinal ends connected as described in the previous paragraph, may form a closed contour, extending along the periphery of the panel to be sealed.

In order to have a better contact surface between the seal and the heat pump system, in particular the casing parts, a sealing fluid can be added between the seal and the heat pump system. This improves the sealing and can be necessary in case there is a high pressure (for example it is mainly used with hydraulic seal with pump). Such a sealing fluid closes the gap on a fine scale. Furthermore, the lifetime of the seal is increased because the sealing fluid protects the seal from cracking due to aging or temperature drop. Sealing fluids used for this may be fatty materials such as silicone or petroleum jelly-based products such as Vaseline.

According to a further embodiment, a further material or layer may be added to the seal, such as a polyurethane foam attached to the sealing section. The further material may be attached by means of adhesion, clipping, molding, fusing, etc. This further increases the sound insulation.

According to an aspect there is provided a method of manufacturing a seal according to any one of the preceding claims, wherein the method comprises:
- providing a first and a second material,
- forming an elongated shape having a bearing section, a sealing section and a continuous fixing structure by extrusion of the first and second material, wherein the continuous fixing structure extends along the body axis of the seal,
- cutting away parts of the continuous fixing structure to create at least one fixing structure or fixing the seal.

The two materials are extruded in a single extruder, thereby linking the two materials together to form a single seal.

In the figures, the subject-matter of the invention is schematically shown, wherein identical or similarly acting elements are usually provided with the same reference signs.
- Figure 1a,c-e,: schematically show cross sectional views of a seal according to an embodiment,
- Figure 1b: schematically shows a perspective view of a seal according to an embodiment,
- Figures 2a-2o: schematically show cross sectional views of seals according to different embodiments, and
- Figures 3: schematically shows a perspective view of a heat pump casing.

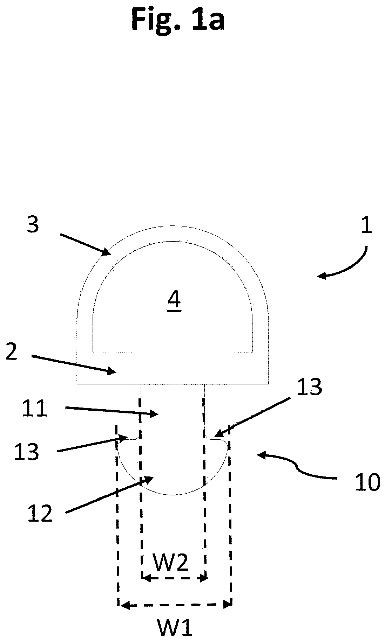

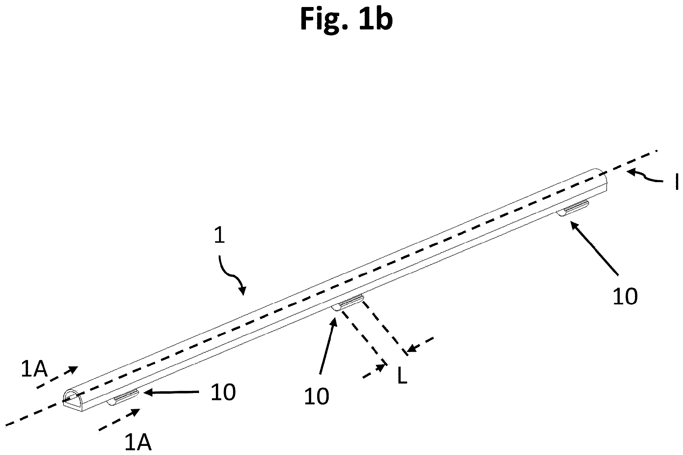

Figures 1a, 1b schematically show a seal 1 for a heat pump casing 20, wherein the seal 1 has an elongated shape extending along a body axis I of the seal 1. The body axis I is shown as a dashed line in Fig. 1b. Fig. 1b shows a perspective view of the seal 1. Fig. 1a shows a cross sectional view, as indicated with arrows 1A in Fig. 1b, i.e. a cross section taken perpendicular to the body axis of the seal.

The seal 1 has a bearing section 2 and a sealing section 3. The bearing section 2 is a flat and/or straight part, where the sealing section 3 is a curved part. The sealing section 3 is connected to the bearing section 2 such that a gas pocket 4 is defined extending along the body axis I of the seal 1. The gas pocket 4 may be open at the ends of the seal, as shown in Fig. 1b.

The seal 1 comprises at least one fixing structure 10, connected to the bearing section 2, to fix the seal 1 to the heat pump casing 20. In the embodiment depicted in Fig. 1b, the seal comprises three fixing structures 10. Any number of fixing structures 10 may be provided, preferably more than two.

The fixing structure 10 has an undercut shape. The fixing structure 10 comprises a plug section 12 and a connection section 11 for connecting the plug section 12 to the bearing section 2. The plug section 12 is wider than the connection section 11 creating the undercut shape.

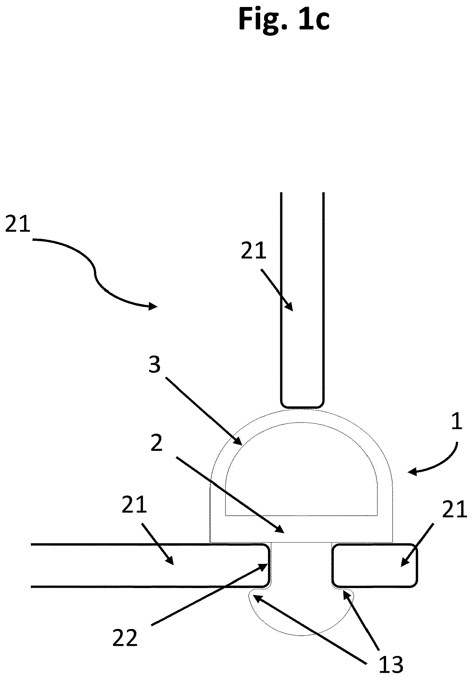

The plug section 12 has a tapered shaped, i.e. a narrowing width in a direction away from the connection section 11, when seen in a cross sectional view along the body axis I of the seal. The plug section 12 has a maximum width W1 greater than a width W2 of the connection section 11. The part of the plug section 12 having the maximum width W1 is connected to the connection section 11. W1 minus W2 may be at least 1,4 mm. As shown in Fig. 1a, a clamping surface 13 is created at the transition from the connection section 11 to the plug section 12. The clamping surface 13, when positioned in an opening in casing part 21 of heat pump casing 20, clamps the fixing structure 10 against the casing parts 21, together with the bearing section 2. This is shown in more detail in Fig. 1c, showing an opening 22 in a casing part 21, with the fixing structure 10 positioned in the opening 22.

Fig. 1c further shows another casing part 21 positioned against the sealing section 3 to provide a seal between the casing parts 21. It is noted that Fig. 1c shows the seal in an undeformed state. However, it will be understood that in particular the sealing section 3 may deform if the casing parts 21 are positioned more closely together. The seal 1 is deformable allows to compensate for spacing tolerances in between casing parts 21, without significant mechanical stress on the casing parts 21.

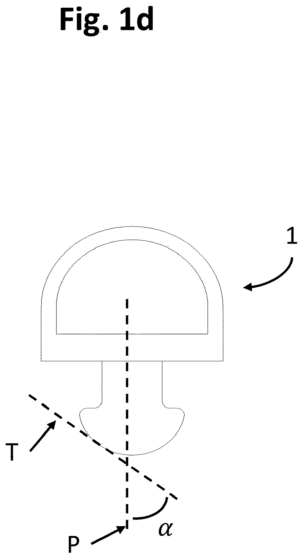

As shown in Fig. 1d, the plug section has a middle part with a taper angle α defined to be the angle between a plug body axis P and a tangent T of a middle part of the plug section.

The fixing structure 10 has an elongated shape in the direction of the body axis I, as can be seen in Fig. 1a. The fixing structure 10 extends along a length L, as indicated in Fig. 1b, where L is at least 10 times greater than the largest width of a cross section of the seal 1, the cross section being perpendicular to the body axis of the seal.

The bearing section 2 is made from a thermoplastic material such as ethylene propylene diene monomer (EPDM), having a hardness of at least 70 Shore A. The sealing section 2 is also made from a thermoplastic material such as ethylene propylene diene monomer (EPDM), having a hardness of maximum 35 Shore A.

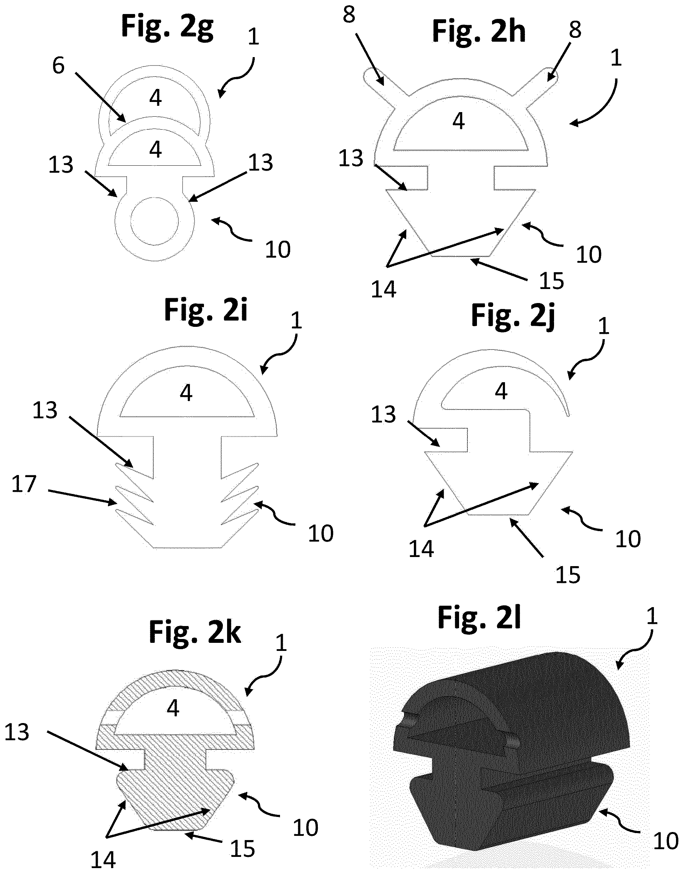

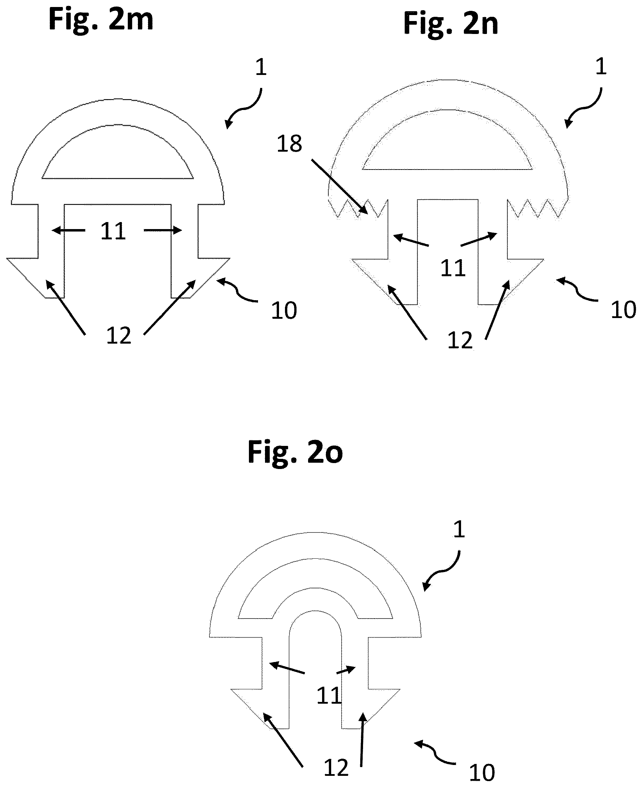

Fig.'s 2a - 2k, 2m -2o schematically show cross sectional views of seals 1 according to alternative embodiments. Fig. 2l shows a perspective view of the seal 1 of Fig. 2k. The cross sections are taken perpendicular to the body axis of the seal.

For reasons of clarity, not all reference numbers are repeated in each figure.

It will be understood that the different configurations of bearing sections 2 and sealing sections 3 shown in Fig.'s 2a-2i can be combined with the different fixing structures 10 shown in Fig.'s 2a-2i.

### Bearing section and sealing section

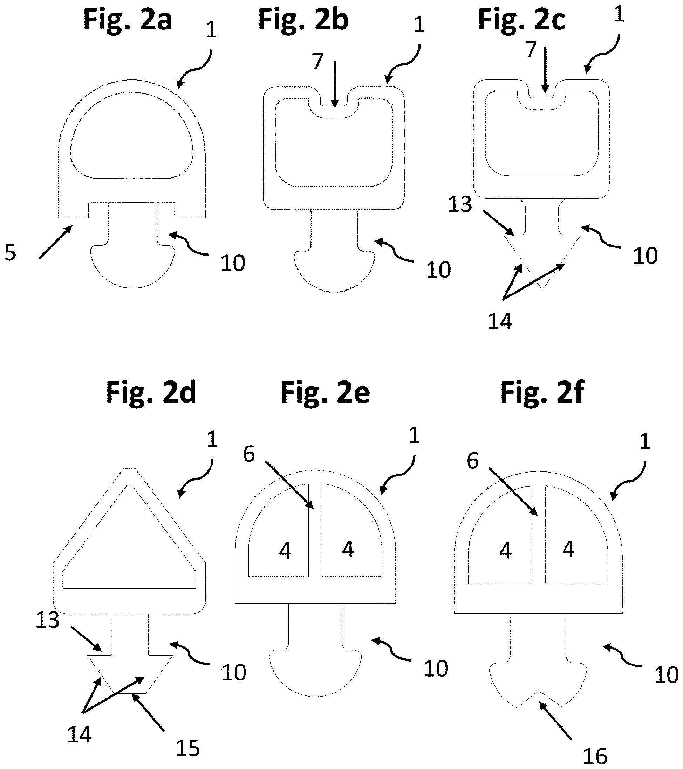

Fig. 2a shows an embodiment wherein the bearing section 2 comprises bearing protrusions 5 to provide more grip when the fixing portion 10 is force-fitted into an opening of a heat pump casing 20.. The protrusions 5 provide sealing on the side where the seal is fixed to the casing part 21. Protrusions 5 allow the thickness of the opening 22 or casing part 21 to differ. Depending on the thickness the protrusions may deform more or less. If the opening 22 is relatively deep or casing part 21 relatively thick, the bearing section 2 may deform, taking protrusions 5 with it, such that mainly the inner sides of the protrusions may be in contact with the casing part 21.

Fig.'s 2a, 2e, 2h, 2i, 2k, 2l, 2m, 2n and 2o show embodiments wherein the bearing section and the sealing section, when seen in a direction along the body axis I, in particular substantially, have a D-shape, the bearing section 3 forming the, in particular substantially, straight part of the D.

Fig. 2b and 2c show an embodiment wherein the bearing section and the sealing section, when seen in a direction along the body axis I, have a rectangular shape, the bearing section forming one side of the rectangular shape.

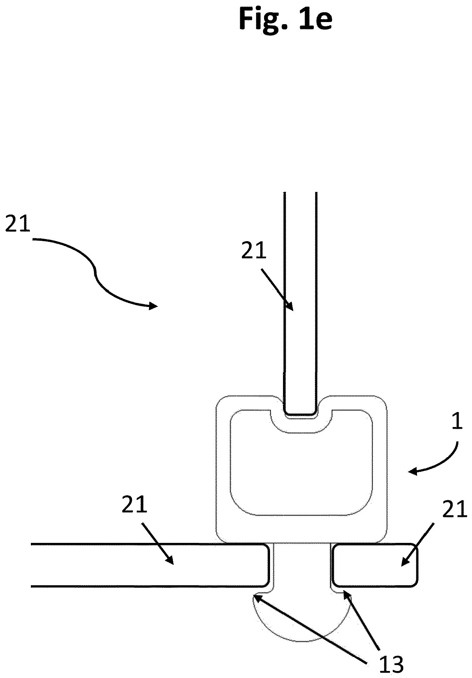

The sealing section 12 may have a recess 7 to receive an adjacent part of a heat pump casing 20, as shown in Fig.'s 2b and 2c. Such a recess 7 functions as a guide for the casing part 21 which is housed in it, as is schematically shown in Fig. 1e. This prevents the seal 1 or casing part 21 from slipping out. In case of mechanical stress or a force exerted on the casing part 21, the seal 1 will deform (e.g. from a D profile to a B profile) without the risk of the casing part 21 slipping out.

Fig. 2d shows an embodiment wherein the bearing section and the sealing section, when seen in a direction along the body axis I, have a triangular shape, the bearing section forming the base of the triangular shape.

Fig. 2f shows an embodiment wherein the bearing section and the sealing section, when seen in a direction along the body axis I, have a B-shape, the bearing section 3 forming the straight part of the B.

Different shapes make it possible to provide seals 1 being compatible with different geometries of the casing parts 21 which are to be sealed.

Fig.'s 2e, 2f and 2g show embodiments wherein the sealing section comprises an inner wall 6, creating two parallel gas pockets 4. Such an inner wall 6 has the advantage of creating an additional wall through which fluids cannot pass, providing improved sealing. The inner wall 6 also forms an additional acoustic barrier, providing improved noise reduction. If one of the outer walls of the seal 1 is torn or damaged, the inner wall 6 ensures that airtightness is maintained. Furthermore, the inner wall 6 strengthens the seal, limits deformation of the seal when under stress.

Fig. 2h shows an embodiment wherein the sealing section comprises one or more sealing protrusions 8 on an outside of a sealing section. The protrusions 8 allow, when the seal 1 is in contact with an adjacent casing part 21 to create a new gas pocket, formed between the protrusions 8 and the surface of the casing part 21 against which the protrusions rest. In this way a second layer of insulation is created with a lower consumption of material, compared to for instance the sealing sections 2 shown in Fig. 2g or 2f. At the same time, these protrusions 8 form a recess 7 in between the protrusions 8, having advantages explained above.

Fig. 2j shows an embodiment wherein the bearing section and sealing section are configured to form a semi closed contour around the gas pocket. Fig's 2k-l show an embodiment with a semi closed contour around the gas pocket as there are localized openings provided in the sealing section that do not extend along the seal. Providing a semi-closed contour to facilitate air being pushed out of the gas pocket and thereby facilitate deformation when the seal is compressed by a casing part of the heat pump casing. This is in particular so when the seal forms a closed loop formed by one or more seals 1 attached to each other. By providing a semi closed contour gas or air may escape from the gas pocket 4, preventing unwanted compression of air or gas, which may result in ballooning of the seal 1. The embodiment shown in Fig. 2j first allows air to be pushed out when being compressed, while compression also deforms the sealing section, pushing it against the bearing section thereby providing a closed gas pocket, with the associated advantages.

Fig. 2n shows an embodiment wherein the bearing section has a serrated surface 18.

### Fixing structure

Fig. 2a, 2b, 2e and 2g show embodiments wherein the tapered shape of the plug section 12 has a semi-spherical shape.

Fig. 2c shows an embodiment wherein the plug section 12 has a triangular shape, with two legs 14 of the triangle forming the tapered shape and a base of the triangle forming the clamping surface 13 at the transition from the connection section to the plug section. Having a plug section with a straight profile facilitates the introduction of the plug section 12 into opening 22. This is useful when the opening 22 is relatively small compared to the plug section 12 and/or when a relatively flexible material is used for the plug section 12. The truncated distal end 15 may facilitate the manufacturing and reduced the amount of material required being ecologically and economically advantageous.

Fig.'s 2d, 2h, 2j, 2k and 2l show embodiments wherein the plug section 12 has the shape of a truncated triangle, with the legs 14 of the triangle forming the tapered shape and a base of the triangle forming the clamping surface 13 at the transition from the connection section to the plug section. The triangle shape is truncated at the corner where the legs 14 would meet, creating a truncated distal end 15.

Fig. 2f shows an embodiment wherein the plug section 12 has a distal notch 16 at the distal end of the plug section 12.

Fig. 2g shows an embodiment wherein the plug section 12, when seen in a direction along the body axis I, has a rounded, hollow shape. The clamping surfaces 13 are formed by the part of the rounded shape facing the bearing section.

Fig. 2i shows an embodiment wherein the tapered shape of the plug section has a stepped profile or teeth 17, with a number of alternating narrowing parts and widening parts. The stepped profile or teeth 17 make the fixing structure 10 compatible with openings 22 of different depth or casing parts 21 with different thicknesses. Depending on the thickness, more or less steps or teeth will penetrate the opening, always providing a step or tooth to clamp the fixing structure 10.

Fig.'s 2m - 2o show embodiments wherein the fixing structure 10 comprises two connection sections and two plug sections parallel to each other. This makes it possible to make wider seals while still guaranteeing a good hold, avoidance of delamination on one side if only plug section was used and avoiding overconsumption of material (compared to one bigger plug section). These embodiments may be useful in case the support areas of the casing parts 21 are wide or where the positioning tolerances of the casing parts 21 are important.

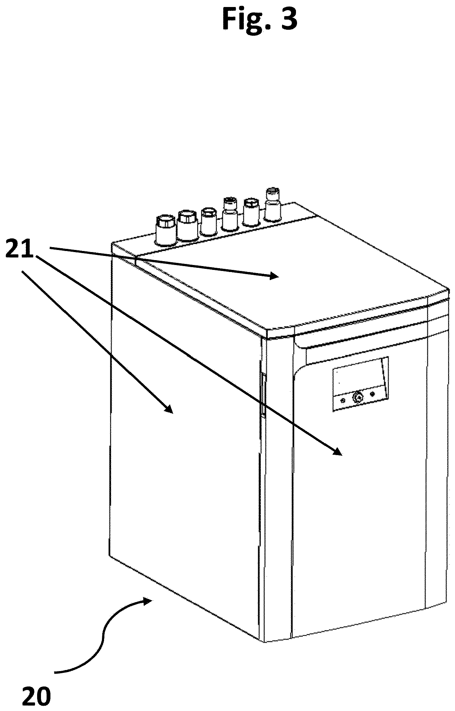

Fig. 3 depicts a perspective view of a heat pump casing 20 with different casing parts 21. Seals 1 may be provided between the casing parts 21, not visible in Fig. 3.

### Reference Signs

- 1.: Seal
- 2.: Bearing section
- 3.: Sealing section
- 4: Gas pocket
- 5.: Bearing protrusions
- 6.: Inner wall
- 7.: Recess
- 8.: Sealing protrusions
- 10.: Fixing structure
- 11.: Connection section
- 12.: Plug section
- 13.: Clamping surface
- 14.: Legs
- 15.: Truncated distal end
- 16.: Distal notch
- 17.: Stepped profile or teeth
- 18.: Serrated surface
- 20.: Heat pump casing
- 21.: Casing part
- 22.: Opening

## Claims

1. A seal (1) for a heat pump casing (20), wherein the seal (1) has an elongated shape extending along a body axis (I) of the seal (1), wherein the seal (1) has a bearing section (2) and a sealing section (3) that is connected to the bearing section (2), wherein the bearing section (2) and the sealing section (3) define a gas pocket (4) extending along the body axis (I) of the seal and wherein the seal (1) comprises at least one fixing structure (10) for fixing the seal (1) to the heat pump casing wherein the fixing structure (10) is connected to the bearing section (2).

2. A seal (1) according to claim 1, wherein the bearing section (2) and sealing section (3) are configured to form a closed contour around the gas pocket (4).

3. A seal (1) according to any one of the preceding claims, wherein the fixing structure (10) is fixedly connected to the bearing section (2).

4. A seal (1) according to any one of the preceding claims, wherein the fixing structure (10) has an undercut shape, which is configured to be force-fitted into an opening (22) in the heat pump casing (20).

5. A seal (1) according to any one of the preceding claims, wherein the fixing structure (10) comprises a plug section (12) and a connection section (11) for connecting the plug section (12) to the bearing section (2), wherein the plug section (12) has a tapered shape in a direction away from the connection section (11), with a maximum width of the plug section (12) located adjacent to the connection section (11), the maximum width being greater than a width of the connection section (11).

6. A seal (1) according to claim 5, wherein the maximum width is at least 1,4 mm greater than the width of the connection section (11).

7. A seal (1) according to any one of the claims 5-6, comprising at least one clamping surface (13) at the transition from the connection section (11) to the plug section (12), the clamping surface (13) facing at least part of the bearing section (2).

8. A seal (1) according to any one of the claims 5-7, wherein the plug section (12) has a middle part with a taper angle in the range of 30° - 70°.

9. A seal (1) according to any one of the preceding claims, wherein the fixing structure (10) has an elongated shape in the direction of the body axis, extending along part of the seal (1).

10. A seal (1) according to any one of the claims 5-9, wherein the fixing structure (10) comprises two parallel connection sections (11) and plug sections (12).

11. A seal (1) according to any one of the preceding claims, wherein
a. a material of the bearing section (2) has a higher hardness than a material of the sealing section (3) and/or wherein
b. the closed contour is formed by a flat bearing section (2) and a sealing section (3), wherein the bearing section (2) is at least partially made from a material having a hardness of at least 70Shore A, in particular a hardness between 70 to 90 Shore A, and wherein the sealing section (3) is at least partially made from a material having a hardness of less than 35Shore A, in particular a hardness between 20 to 35 Shore A.

12. A seal (1) according to claim 11, wherein the first and second materials are
- elastomer, in particular a thermoplastic elastomer and/or
- ethylene propylene diene monomer (EPDM).

13. A seal (1) according to any one of the preceding claims, wherein
a. the bearing section (2) and the sealing section (3), when seen in a direction along the body axis, have a D-shape, the bearing section (2) forming the straight part of the D, or B-shape, the bearing section (2) forming the straight part of the B, or triangular shape, the bearing section (2) forming the base of the triangular shape, or polygonal shape, or, in particular substantially, rectangular shape, the bearing section (2) forming one side of the rectangular shape, and/or wherein
b. the sealing section (3) comprises an inner wall (6), creating two parallel gas pockets, and/or one or more protrusions on an outside of a sealing section (3), and/or the bearing section (2) comprises a serrated surface at an outside of the seal (1).

14. Method of manufacturing a seal (1) according to any one of the preceding claims, wherein the method comprises:
- providing a first and a second material,
- forming an elongated shape having a bearing section (2), a sealing section (3) and a continuous fixing structure (10) by extrusion of the first and second material, wherein the continuous fixing structure extends along the body axis (I) of the seal (1),
- cutting away parts of the continuous fixing structure to create at least one fixing structure (10) for fixing the seal (1).
